# EUROPEAN PATENT SPECIFICATION

(11) **EP 2 552 592 B1**
(45) Date of publication and mention of the grant of the patent: **26.06.2019**
(21) Application number: 11763145.7
(22) Date of filing: 29.03.2011
(51) Int. Cl.: B04B 1/14, B04B 1/08, B04B 7/08, B04B 9/08

(54) **CENTRIFUGAL SEPARATOR AND ROTOR**
ZENTRIFUGALTRENNER UND ROTOR
SÉPARATEUR CENTRIFUGE ET ROTOR

(30) Priority: 31.03.2010 SE 1050309
(43) Date of publication of application: 06.02.2013
(73) Proprietor: Alfa Laval Corporate AB, 221 00 Lund (SE)
(72) Inventor: ISAKSSON, Roland, S-147 92 Grödinge (SE); THORWID, Peter, S-172 75 Sundbyberg (SE)
(74) Representative: Alfa Laval Attorneys
(86) International application number: PCT/SE2011/050348
(87) International publication number: WO 2011/123032

(56) References cited:
- EP-B1- 0 208 485
- WO-A1-95/33543
- WO-A1-98/46896
- WO-A1-2009/015853
- CH-A- 238 684
- DE-U1- 20 010 743
- GB-A- 212 551
- GB-A- 2 169 225
- US-A- 3 967 778
- US-B1- 6 224 531

## Description

### BACKGROUND OF THE INVENTION AND PRIOR ART

The invention relates to a centrifugal separator for separation of at least two components of a fluid mixture which are of different densities. The centrifugal separator comprises a rotor which is rotatable about an axis of rotation. The rotor comprises a rotor wall which surrounds an inner space with a separating chamber within the rotor, with an inlet adapted to feeding the fluid mixture into the rotor's separating chamber and at least one outlet adapted to discharging out from the rotor a component separated from the fluid mixture. A rotor shaft is arranged to be connected to a hub on the rotor wall, and the rotor is supported via the rotor shaft which is drivably connected to a motor for rotation of the rotor about the axis of rotation. The hub is situated outside the rotor's inner space and has for the rotor shaft a connection directed axially outwards from the rotor, with a fastening so arranged at the side of the rotor wall which faces away from the inner space as to be operable from the outside of the rotor in order to releasably connect the hub to the rotor shaft.

GB 2169225 A, CH 238 684 A, WO 2009015853 A1, GB 212551 A and DE 20010743 U1 all refer to known such centrifugal separators.

US 4191325 A refers to a known such centrifugal separator. The rotor is situated uppermost on a vertical rotor shaft and comprises a hub connected to the rotor shaft. The shown hub has a connection which is configured for the rotor shaft and which is conical and extends axially inwards in the rotor's inner space, and a portion of the rotor shaft which is inserted in the rotor's hub has a corresponding conical shape and likewise extends inwards in the rotor. The conical shape results in self-locking of the hub and the rotor shaft during rotation, thereby achieving during operation a transfer of torque between the rotor shaft and the rotor. The conical shape also results in self-centering of the rotor on the rotor shaft. Within the rotor, a nut is provided on the end of the rotor shaft to lock the rotor axially to the rotor shaft. The nut thus provides protection against (axial) forces which may act upon the rotor during operation. Removing the rotor from the rotor shaft involves first dismantling the rotor's constituent parts in order thereby to open up its interior so that the nut can be removed. Such dismantling is relatively time-consuming.

US 3519200 A refers to another known centrifugal separator with a similar connection between the rotor shaft and the hub. Consequently, this hub likewise has a conical connection which extends axially inwards in the rotor's inner space, and the portion of the rotor shaft which is inserted in the hub has a corresponding conical shape and likewise extends inwards in the rotor. This centrifugal separator comprises also a duct extending axially within the rotor shaft and serving as an inlet for the liquid fluid mixture which is to be separated in the rotor. The duct leads into a so-called distributor through which the liquid mixture is supplied to the separating chamber. During operation, the configuration of the inlet with the duct and the distributor causes the liquid mixture to follow a transfer path in which there are two relatively large changes of direction of flow (about 155° each). The first change of direction is at the transition between the duct and the distributor and the second change of direction is at the transition from the distributor upwards to the separating chamber. Such large changes of direction cause the liquid mixture fed to the separating chamber to be subject to undesirable flow resistance and pressure drop.

### SUMMARY OF THE INVENTION

An object of the present invention is to propose a centrifugal separator which allows simplified handling of a rotor and which at the same time has advantageous characteristics.

This object is achieved by the centrifugal separator indicated in the introduction which is characterised in that said fastening is a clamping device arranged to connect the hub to the rotor shaft in a releasable frictional fastening and in which the hub is configured to radially surround a portion of the rotor shaft and that an annular space is arranged radially between the hub and the rotor shaft, in which space said clamping device is fitted for frictional engagement with the hub and with the rotor shaft in the releasable frictional fastening and in which the hub comprises an axial stop for the clamping device, in the form of an abutment surface with a radial extent, arranged to abut against an end of the clamping device, which end is within the hub.

This provides assurance that the hub assumes a correct axial position relative to the rotor shaft. Alternatively, the rotor shaft might be provided with such an axial stop in the form of a flange or the like directed radially outwards and arranged to abut against a portion of the hub or the rotor wall.

The invention makes it possible for the rotor to be released from the outside, with consequently no need for the rotor to be dismantled in order to be removed from the rotor shaft. Accordingly, the whole rotor can be removed after releasing the fastening from the outside of the rotor. The invention thus makes it possible to handle the complete rotor. This means that a simple change of rotor can be effected by a complete new assembled rotor being fitted on and locked to the rotor shaft by means of the fastening which is releasable from outside the rotor.

The present invention also affords other advantages. According to the invention, the hub is situated outside the rotor's inner space and has for the rotor shaft a connection directed axially outwards from the rotor. This means that the hub has no axial extent inwards in the rotor's inner space. As the rotor shaft and the hub do not penetrate the inner space or occupy any space within the rotor, the resulting void in the inner space can be used for other purposes. Such a void in the inner space may for example be used to provide liquid passages to and from the centrifugal separator in a more advantageous way (with regard to flow). A more detailed description of such liquid passages appears below. The void in the inner space may also accommodate measuring instruments for measuring various parameters within the rotor during operation. This void is situated centrally within the rotor and is therefore not subject to any major centrifugal forces. Said measuring instruments are therefore protected from excessive centrifugal forces which might otherwise damage them.

According to an embodiment of the invention, the hub is tubular, extends axially outwards from the rotor wall and is configured to radially surround a portion of the rotor shaft, and the fastening is arranged to connect the hub to said portion of the rotor shaft. The tubular hub facilitates the fitting and alignment of the rotor on the rotor shaft. The tubular hub also results in a relatively elongate axial connection for the rotor shaft, making it possible to ensure good connection.

According to an alternative embodiment of the invention to the embodiment described above, the hub takes the form of a recess in the rotor wall and is configured to radially surround a portion of the rotor shaft, and the fastening is arranged to connect the hub to said portion of the rotor shaft. Such a recess is preferably provided in a relatively thick rotor wall. The recess in the rotor wall may thus be made deep enough to serve as a connection for the rotor shaft, with no need for the hub to extend axially inwards in the rotor's inner space. The fastening may therefore take the form of a frictional fastening fitted in an annular space which is arranged radially between the hub and the rotor shaft.

According to a further embodiment of the invention, both the rotor shaft and the hub are cylindrical. A cylindrical rotor shaft and a cylindrical connection are relatively easy and inexpensive to make as compared with the previously described conical shape. A cylindrical rotor shaft and a cylindrical connection are also suited to releasable fastenings, e.g. a frictional fastening in the form of a clamping sleeve or a threaded connection.

According to another embodiment of the invention, the rotor shaft has running through it at least one axial duct adapted to have fluid flowing through it during operation of the centrifugal separator, and the hub comprises for said duct a duct connection which is arranged to communicate with the separating chamber via at least one fluid passage provided in the rotor. Said duct(s) may for example be used to feed in the fluid mixture which is to be separated and/or to discharge a separated component. Such inlets and outlets are usually configured as so-called hermetic inlets and outlets for the separating chamber. This means that the fluid transfer can take place without air admixture/air contact and in a way which requires relatively little energy. Said duct may also be used to convey, for example, a hydraulic liquid used for operating a conventional system for intermittent discharge of the separating chamber (discharge of sludge).

According to another embodiment of the invention, said duct together with the duct connection and said fluid passage to the separating chamber form for said fluid a transfer path so configured that fluid conveyed does not change direction by more than 100° relative to the axis of rotation. The present invention allows such a configuration of the transfer path, since the rotor shaft and the hub do not extend axially inwards in the rotor's inner space or occupy any space therein. This means that the direction of the liquid fluid mixture need not change as much as in the prior art centrifugal separator according to US 3519200 A. Instead, the hub may be provided with a duct connection which preferably changes the direction of the flow from the duct by 90° to a liquid passage adapted to leading the flow straight outwards in a radial direction to the separating chamber. This results in favourable flow relationships (lower flow resistance and pressure drop), since the fluid mixture fed in need not undergo as much change of direction.

According to another embodiment of the invention, the clamping device may comprise an outer sleeve expandable radially outwards and configured for frictional engagement with the hub, an inner sleeve expandable radially inwards and configured for frictional engagement with the rotor shaft, an annular gap extending axially between the outer sleeve and the inner sleeve, and means for pressurising a pressure medium in the gap in order to expand the outer sleeve and the inner sleeve to a locking state for the hub and the rotor shaft. Such a clamping device effects rapid and secure connection of the rotor shaft and the hub.

According to another embodiment of the invention, the hub comprises an axial stop for the clamping device in the form of an abutment surface with a radial extent configured to abut against an end of the clamping device which is within the hub. This provides assurance of correct axial positioning of the clamping device relative to the hub.

According to a further embodiment of the invention, the separating chamber contains a stack of truncated conical separating discs, the hub is situated on an underside of the rotor, and the rotor shaft is oriented vertically and supports uppermost the rotor. Such separators with separating discs are extremely effective for separation of fluid mixtures in liquid form and particles suspended therein. A complete rotor is lifted onto the rotor shaft and connected to it by the fastening.

According to another embodiment of the centrifugal separator, the rotor comprises outlet apertures peripherally in the rotor wall for discharge of a separated component in the form of sludge from the separating chamber, and an elastic sliding element is provided within the rotor to open and close said outlet apertures, which sliding element has a radially inner edge connected to, and axially fixed relative to, the rotor, and a radially outer edge portion which is axially movable relative to the rotor between outlet aperture open and closed states by elastic deformation of the sliding element. Such an elastic sliding element is also described in specification WO 96/41683 A1 and is particularly appropriate to the present invention, since the elastic element needs no axial support within the rotor. In the case of a conventional sliding element (which is not elastically configured), the hub which extends axially inwards in the rotor's inner space is used to support the sliding element, which is intended to move axially upwards/downwards on the hub during closure/opening of the outlet apertures. In the present invention, however, the hub does not extend axially inwards in the rotor's inner space and therefore provides no axial support for the sliding element. Hence, the use of the elastic sliding element, since it doesn't need the axial support.

According to a further embodiment, the hub may for example take the form of a shaft journal extending axially outwards from the rotor wall. The shaft journal and the rotor shaft may then be connected together via a fastening which in this case takes the form of a shaft coupling. This makes it possible for the centrifugal separator to be so arranged that the shaft journal is provided with a first bearing member (e.g. a so-called top bearing for the rotor) mounted on the journal, while the rotor shaft is journalled by another bearing member (e.g. a so-called bottom bearing for the rotor) in a frame. This means that the whole rotor, including the shaft journal with the first bearing member mounted on it, can be fitted in the frame with said rotor shaft and the second bearing member. The shaft journal and the rotor shaft are thereafter aligned and connected together by the shaft coupling which is thus situated between the first bearing member and the second bearing member.

### BRIEF DESCRIPTION OF THE DRAWINGS

The invention is explained below in more detail by a description of embodiments cited as examples with reference to the attached drawings.
Fig. 1 shows a centrifugal separator according to a first embodiment of the invention.
Fig. 2 shows a centrifugal separator according to a second embodiment of the invention.

### DETAILED DESCRIPTION OF VARIOUS EMBODIMENTS

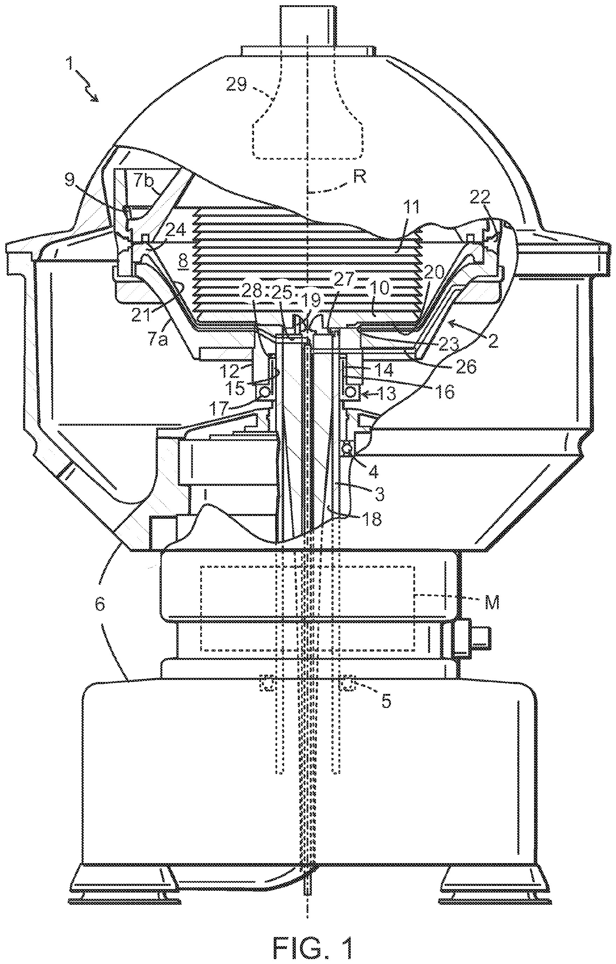

Fig. 1 shows a centrifugal separator 1 according to a first embodiment of the invention. The centrifugal separator 1 comprises a rotor 2 situated uppermost on a vertical rotor shaft 3. The rotor shaft 3 is journalled by an upper bearing (a so-called top bearing 4) and a lower bearing (a so-called bottom bearing 5) in a frame 6. The rotor shaft 3 is thus arranged to support the rotor 2 for rotation about a vertical axis of rotation R in the frame 6. A motor M is adapted to driving the rotor 2 about the axis of rotation R. The rotor 2 has a rotor wall 7a, 7b which surrounds an inner space with a separating chamber 8 in which the main centrifugal separation takes place. The inner space comprises also other spaces within the rotor, e.g. inlet passages for the mixture which is to be separated in the separation space 8, and at least one outlet chamber for a separated component. The rotor wall is divided into a lower part 7a and an upper part 7b which are held together by a locking ring 9. A compressible unit 10 comprising a stack of truncated conical separating discs 11 is situated in the inner space, centrally within the rotor. A more detailed description of the compressible unit 10 appears in specification WO 2008/111889 A1. The stack of separating discs 11 is situated in the separating chamber 8 and arranged to form between mutually adjacent separating discs thin intermediate spaces in which the main separation takes place during operation of the centrifugal separator. Figure 1 shows schematically a small number of separating discs 11 with relatively large intermediate spaces between them. In practice, however, a large number of separating discs are stacked on one another, and the surfaces of the separating discs are provided with spacing elements to maintain the thin intermediate spaces between mutually adjacent separating discs.

The rotor 2 comprises a hub 12 situated on the outside of the lower part 7a of the rotor wall and outside the rotor's inner space. The hub 12 is tubular and extends axially outwards/downwards from the lower part 7a, and the tubular hub is configured to radially surround a portion of the rotor shaft 3. Both the tubular hub 12 and the rotor shaft 3 are cylindrical with circular cross-sections. A releasable clamping device 13 is arranged to connect the hub 12 to said portion of the rotor shaft 3 in a frictional fastening. Such a clamping device 13 is prior art and US 4093052 A or SE 512 052 C2 may for example be referred to for a more detailed description. The clamping device 13 is fitted in an annular space which is arranged radially between the hub 12 and the rotor shaft 3. The clamping device 13 has an outer sleeve 14 which is expandable radially outwards and configured for frictional engagement with the hub 12, and an inner sleeve 15 which is expandable radially inwards and configured for frictional engagement with the rotor shaft 3. An annular gap 16 extends axially between the outer sleeve 14 and the inner sleeve 15, and a pressurising screw 17 is provided for pressurisation of a pressure medium in the gap 16 in order to expand the outer sleeve 14 and the inner sleeve 15 to a state in which they lock the hub 12 and the rotor shaft 3. The pressurising screw 17 may be slackened to reduce the pressure on the pressure medium so that the expandable sleeves 14, 15 revert to their original shape and the fastening is thus undone so that the rotor shaft 3 and the rotor 2 are released from one another.

The centrifugal separator in Fig. 1 has an inlet comprising a duct 18 which extends axially through the rotor shaft 3, and the rotor 2 has a connection 19 for the duct 18. The connection 19 is disposed within the hub 12 and arranged to communicate with the separating chamber 8 via a number of liquid passages in the form of distribution ducts 20 which extend straight outwards radially from the connection 19 and lead into the separating chamber 8. The distribution ducts 20 are disposed at equal spacing in the circumferential direction within the rotor 2. The distribution ducts 20 form an angle of 90° with the axis of rotation R. Consequently, the connection 19 within the hub 12 is arranged to change the direction of flow by 90° from the duct 18 to the distribution ducts 20 which are adapted to leading the flow straight outwards in a radial direction to the separating chamber 8. The lower part 7a of the rotor shown has a radially inner planar wall portion and a radially outer sloping and surrounding wall portion. The distribution ducts 20 are disposed along the underside of the compressible unit 10 which comprises the separating discs 11. The distribution ducts 20 thus lead into the separating chamber 8 at the lower portion of the compressible unit 10, and the direction of the liquid mixture is again changed by about 90° (relative to the direction in the distribution ducts) upwards in the separating chamber 8 containing the stack of separating discs 11.

An elastic sliding element 21 is provided within the rotor 2 to open and close a number of outlet apertures 22 which are disposed peripherally in the lower part 7a of the rotor wall. The elastic sliding element 21 is also described in specification WO 96/41683 A1. The sliding element 21 has a radially inner edge 23 connected to, and axially fixed relative to, the rotor 2, and a radially outer edge portion 24 which is axially movable relative to the rotor 2 between open and closed states of the outlet aperture 22 by elastic deformation of the sliding element 21. The elastic sliding element 21 is deformed (operated) by feeding a hydraulic liquid in/out to fill/empty a closing chamber disposed between the sliding element 21 and the lower part 7a of the rotor wall. The rotor shaft 3 shown encloses a duct 25 for supply to the closing chamber of a liquid which by centrifugal force and consequent hydraulic pressure pushes the underside of the elastic sliding element 21 to a closed state of the outlet aperture 22. The rotor shaft 3 encloses also a duct 26 for supply of liquid to open a discharge valve through which the liquid of the closing chamber is drained. Emptying the closing chamber of liquid reduces the hydraulic pressure from the underside of the sliding element 21, with the result that the sliding element is deformed elastically so that its radially outer edge portion 24 moves axially downwards and opens the outlet aperture 22. Such a procedure of opening the outlet apertures 22 is conducted in situations where the rotor 2 needs to be emptied of the sludge which accumulates over time in the radially outer portions of the separating chamber 8. Such a sliding element is particularly applicable to the present invention, since the elastic sliding element 21 needs no axial support within the rotor 2. In the case of a conventional sliding element (which is not elastically deformed) the hub which extends axially inwards in the rotor is used to support an inner edge of the sliding element which is arranged to move axially upwards/downwards on the hub during closing/opening of the outlet apertures 22.

The hub 12 comprises an axial stop 27 for the rotor shaft 3 in the form of an annular abutment surface extending radially inwards and arranged to abut against the rotor shaft's free end within the hub. This is a simple way to ensure correct axial positioning of the rotor shaft 3 relative to the hub 12. The hub 12 comprises also an axial stop 28 for the clamping device 13, in the form of a similar abutment surface extending radially and configured to abut against an end of the clamping device 13, which end is within the hub 12. Correct axial positioning of the clamping device 13 relative to the hub 12 is thus ensured.

An outlet chamber 29 for a separated liquid component is provided in the upper portion of the compressible unit 10. The outlet chamber 29 communicates with the separating chamber 8 via outlet passages (not shown). The centrifugal separator 1 comprises also members (not shown) for discharging the liquid component out from the outlet chamber 29 and the rotor 2.

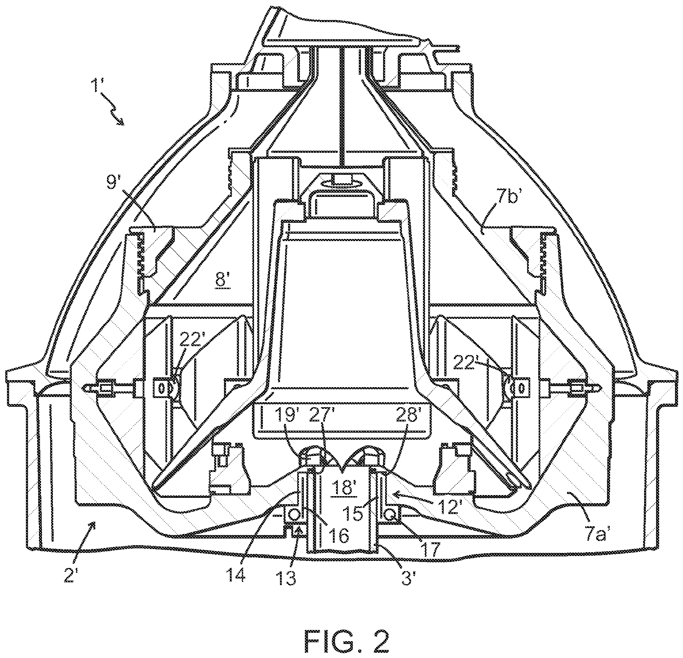

Fig. 2 shows a centrifugal separator 1' according to a second embodiment of the invention. It should be noted that constituent parts which have the same or similar functions are designated by the same reference signs in both embodiments. This centrifugal separator 1' differs from the centrifugal separator according to Fig. 1 inter alia in the configuration of the hub 12'. This hub 12' takes the form of a recess in the lower part 7a' of the rotor wall. The recess is formed in a relatively thick rotor wall 7a'. The recess 12' may therefore be made deep enough, with no need for the hub to extend axially inwards in the rotor 2'. The recess 12' is configured to radially surround a portion of the rotor shaft 3', and a clamping device 13 is provided to connect the hub to said portion of the rotor shaft 3'. This involves the clamping device 13 being fitted in an annular space arranged radially between the hub 12' and the rotor shaft 3'. The clamping device 13 has in this embodiment the same configuration as in Fig. 1.

This centrifugal separator 1' differs also in that the rotor 2' has outlet apertures in the form of nozzles 22' disposed peripherally in the rotor wall 7a'. Such nozzles 22' are adapted to continuous discharge of separated solid particles (sludge) from the separating chamber 8'. Such a rotor 2' is used in separation of liquid mixtures with relatively high concentrations of solid particles (sludge), viz. from about 6% to 25 - 30% (by volume). This rotor 2' thus has nozzles 22' arranged to be constantly open, with consequently no need for a discharge system with closing chamber and sliding element (such as shown in Fig. 1). Nor is there any need for a duct to supply a hydraulic liquid to a closing chamber, or for a duct to supply a liquid to a discharge valve in order to empty the closing chamber of its liquid.

As shown in Fig. 2, the centrifugal separator 1' however comprises a similar inlet for the liquid mixture, in the form of a duct 18' extending axially through the rotor shaft 3' with a similar connection 19' for the duct 18' within the hub 12'. In this embodiment example, the connection 19' is likewise arranged to communicate with the separating chamber 8' via a number of liquid passages in the form of distribution ducts (not shown) which extend outwards radially from the connection 19' and lead into the separating chamber 8'. These distribution ducts are likewise disposed at equal spacing in the circumferential direction within the lower portion of the separating chamber 8' and extend in principle straight radially outwards from the connection 19'. However, the lower part 7a' of the rotor shown slopes somewhat downwards in a radially outward direction, and the distribution ducts do in principle follow this slope or angle relative to the axis of rotation R. As shown in Figure 2, the change of direction is about 100°. These distribution ducts lead into the lower portion of the separating chamber 8', and the liquid mixture again changes direction by about 100° (relative to the direction in the distribution ducts) upwards in the separating chamber 8'. This separating chamber 8' is likewise provided with a stack of separating discs (not shown in Figure 2).

The hub 12' shown in Fig. 2 comprises likewise an axial stop 27' for the rotor shaft 3' in the form of an abutment surface with a radial extent, arranged to abut against the rotor shaft's free end within the hub 12'. The hub 12' likewise comprises an axial stop 28' for the clamping device 13, in the form of an abutment surface extending radially inwards and configured to abut against an end of the clamping device 13, which end is within the hub 12'. In this embodiment example, the respective axial stops 27' and 28' for the rotor shaft 3' and for the clamping device 13 constitute a single radial surface.

The invention is not limited to the embodiment examples described but may be varied and modified within the scope of the claims set out below. According to a further embodiment, the hub may for example take the form of a shaft journal which extends radially outwards from the rotor wall.

The shaft journal and the rotor shaft may therefore be connected together via a fastening which in this case takes the form of a shaft coupling. The centrifugal separator may thus be so arranged that the journal is provided with a first bearing member (e.g. a so-called top bearing for the rotor) mounted on the shaft journal, and the rotor shaft is supported by a second bearing member (e.g. a so-called bottom bearing for the rotor) in a frame. This means that the whole rotor, including the shaft journal with the first bearing member mounted on it, can be fitted in the frame with said rotor shaft and the second bearing member. The shaft journal and the rotor shaft are thereafter aligned and connected together by the shaft coupling, which is thus situated between the first bearing member and the second bearing member.

## Claims

1. A centrifugal separator (1, 1') for separation of at least two components of a fluid mixture which are of different densities, which centrifugal separator comprises
a rotor (2, 2') rotatable about an axis of rotation (R) and comprising a rotor wall (7a, 7b, 7a', 7b') which surrounds an inner space with a separating chamber (8, 8') within the rotor (2, 2'),
an inlet (18, 18', 19, 19', 20) for feeding the fluid mixture into the rotor's separating chamber (8, 8'),
at least one outlet (22, 22', 29) for discharging out from the rotor (2, 2') a component separated from the fluid mixture, and
a rotor shaft (3, 3') arranged to be connected to a hub (12, 12') on the rotor wall, the rotor (2, 2') being supported via the rotor shaft which is drivably connected to a motor (M) for rotation of the rotor about the axis of rotation (R),
that the hub (12, 12') is situated outside the rotor's inner space and has for the rotor shaft a connection directed axially outwards from the rotor, with a fastening (13) so arranged at the side of the rotor wall which faces away from the inner space as to be operable from the outside of the rotor in order to releasably connect the hub (12, 12') to the rotor shaft (3, 3'),
**characterised in**
**that** said fastening is a clamping device (13) arranged to connect the hub (12, 12') to the rotor shaft (3, 3') in a releasable frictional fastening and in which the hub (12, 12') is configured to radially surround a portion of the rotor shaft (3, 3') and that an annular space is arranged radially between the hub (12, 12') and the rotor shaft (3, 3'), in which space said clamping device (13) is fitted for frictional engagement with the hub (12, 12') and with the rotor shaft (3, 3') in the releasable frictional fastening and in which the hub comprises an axial stop (28, 28') for the clamping device, in the form of an abutment surface with a radial extent, arranged to abut against an end of the clamping device (13), which end is within the hub (12, 12').

2. A centrifugal separator according to claim 1, in which said hub (12) is tubular, extends axially outwards from the rotor wall (7a) and is configured to radially surround a portion of the rotor shaft (3), and the fastening (13) is arranged to connect the hub (12) to said portion of the rotor shaft (3).

3. A centrifugal separator according to claim 1, in which the hub (12') takes the form of a recess in the rotor wall (7a') and is configured to radially surround a portion of the rotor shaft (3'), and the fastening (13) is arranged to connect the hub (12') to said portion of the rotor shaft (3').

4. A centrifugal separator according to any one of the previous claims, in which the rotor shaft (3, 3') and the hub (12, 12') are cylindrical.

5. A centrifugal separator according to any one of the previous claims, in which the rotor shaft (3, 3') has running through it at least one axial duct (18, 18') adapted to have fluid flowing through it during operation of the centrifugal separator, and the hub (12, 12') comprises for said duct (18, 18') a duct connection (19, 19') which is arranged to communicate with the separating chamber (8, 8') via at least one fluid passage (20) provided in the rotor.

6. A centrifugal separator according to claim 5, in which said duct (18, 18') together with the duct connection (19, 19') and said fluid passage (20) to the separating chamber (8, 8') form for said fluid a transfer path so configured that the fluid conveyed does not change direction by more than 100°, preferably by not more than 90 °, relative to the axis of rotation (R).

7. A centrifugal separator according to any one of the previous claims, in which the hub (12, 12') comprises an axial stop (27, 27') for the rotor shaft, in the form of an abutment surface with a radial extent, arranged to abut against the free end of the rotor shaft (3, 3') within the hub (12, 12').

8. A centrifugal separator according to any one of the previous claims, in which the clamping device (13) comprises an outer sleeve (14) which is expandable radially outwards and configured for frictional engagement with the hub (12, 12'), an inner sleeve (15) which is expandable radially inwards and configured for frictional engagement with the rotor shaft (3, 3'), an annular gap (16) extending axially between the outer sleeve (14) and the inner sleeve (15), and means (17) for pressurising a pressure medium in the gap in order to expand the outer sleeve (14) and the inner sleeve (15) to a state in which they lock the hub (12, 12') and the rotor shaft (3, 3').

9. A centrifugal separator according to any one of the previous claims, in which the separating chamber (8, 8') contains a stack of truncated conical separating discs (11), the hub (12, 12') is situated on an underside (7a, 7a') of the rotor (2, 2'), and the rotor shaft (3, 3') is oriented vertically and supports uppermost the rotor (2, 2').

10. A centrifugal separator according to any one of the previous claims, in which the rotor comprises outlet apertures (22) peripherally in the rotor wall (7a) for discharge of a separated component in the form of sludge from the separating chamber (8), and an elastic sliding element (21) is provided within the rotor to open and close said outlet apertures (22), which sliding element (21) has a radially inner edge (23) connected to, and axially fixed relative to, the rotor (2), and a radially outer edge portion (24) which is axially movable relative to the rotor between open and closed states of the outlet aperture (22) by elastic deformation of the sliding element (21).

11. A centrifugal separator according to claim 1, in which the hub takes the form of a shaft journal extending axially outwards from the rotor wall (7a, 7b) and the fastening takes the shape of a releasable shaft coupling which connects together the shaft journal and the rotor shaft.

## Patentansprüche

1. Zentrifugalabscheider (1, 1') zur Abscheidung wenigstens zweier Bestandteile eines Fluidgemischs, die unterschiedliche Dichten haben, wobei der Zentrifugalabscheider Folgendes umfasst:
einen Rotor (2, 2'), der um eine Drehachse (R) drehbar ist und eine Rotorwand (7a, 7b, 7a', 7b') umfasst, die einen Innenraum mit einer Abscheidekammer (8, 8') innerhalb des Rotors (2, 2') umgibt,
einen Einlass (18, 18', 19, 19', 20) zum Einspeisen des Fluidgemischs in die Abscheidekammer (8, 8') des Rotors,
wenigstens einen Auslass (22, 22', 29) zum Abführen eines aus dem Fluidgemisch abgeschiedenen Bestandteils aus dem Rotor (2, 2') und
eine Rotorwelle (3, 3'), die dafür angeordnet ist, mit einer Nabe (12, 12') an der Rotorwand verbunden zu werden, wobei der Rotor (2, 2') über die Rotorwelle getragen wird, die antreibbar mit einem Motor (M) verbunden ist, zur Drehung des Rotors um die Drehachse (R),
dass die Nabe (12, 12') außerhalb des Innenraums des Rotors angeordnet ist und für die Rotorwelle eine Verbindung, die von dem Rotor in Axialrichtung nach außen gerichtet ist, wobei eine Befestigung (13) so an derjenigen Seite der Rotorwand, die von dem Innenraum weg zeigt, angeordnet ist, dass sie von der Außenseite des Rotors aus funktionsfähig ist, um die Nabe (12, 12') lösbar mit der Rotorwelle (3, 3') zu verbinden,
**dadurch gekennzeichnet,**
**dass** die Befestigung eine Klemmvorrichtung (13) ist, die dafür angeordnet ist, die Nabe (12, 12') in einer lösbaren reibschlüssigen Befestigung mit der Rotorwelle (3, 3') zu verbinden, und in der die Nabe (12, 12') dafür konfiguriert ist, einen Abschnitt der Rotorwelle (3, 3') in Radialrichtung zu umgeben, und dass ein ringförmiger Raum in Radialrichtung zwischen der Nabe (12, 12') und der Rotorwelle (3, 3') angeordnet ist, wobei in diesem Raum die Klemmvorrichtung (13) für einen reibschlüssigen Eingriff mit der Nabe (12, 12') und mit der Rotorwelle (3, 3') in der lösbaren reibschlüssigen Befestigung eingepasst ist, und wobei die Nabe einen axialen Anschlag (28, 28') für die Klemmvorrichtung umfasst, in der Form einer Widerlagerfläche mit einer radialen Ausdehnung, die dafür angeordnet ist, an ein Ende der Klemmvorrichtung (13) anzustoßen, wobei sich dieses Ende innerhalb der Nabe (12, 12') befindet.

2. Zentrifugalabscheider nach Anspruch 1, wobei die Nabe (12) röhrenförmig ist, sich axial von der Rotorwand (7a) aus nach außen erstreckt und dafür konfiguriert ist, wenigstens einen Abschnitt der Rotorwelle (3) in Radialrichtung zu umgeben, und die Befestigung (13) dafür angeordnet ist, die Nabe (12) mit dem Abschnitt der Rotorwelle (3) zu verbinden.

3. Zentrifugalabscheider nach Anspruch 1, wobei die Nabe (12') die Form einer Aussparung in der Rotorwand (7a') annimmt und dafür konfiguriert ist, einen Abschnitt der Rotorwelle (3') in Radialrichtung zu umgeben, und die Befestigung (13) dafür angeordnet ist, die Nabe (12') mit dem Abschnitt der Rotorwelle (3') zu verbinden.

4. Zentrifugalabscheider nach einem der vorhergehenden Ansprüche, wobei die Rotorwelle (3, 3') und die Nabe (12, 12') zylindrisch sind.

5. Zentrifugalabscheider nach einem der vorhergehenden Ansprüche, wobei die Rotorwelle (3, 3') durch sie verlaufend wenigstens einen axialen Kanal (18, 18') aufweist, der dafür geeignet ist, während des Betriebs des Zentrifugalabscheiders Fluid durch ihn fließen zu lassen, und die Nabe (12, 12') für den Kanal (18, 18') eine Kanalverbindung (19, 19') umfasst, die dafür angeordnet ist, über wenigstens einen Fluiddurchgang (20), der in dem Rotor bereitgestellt wird, mit der Abscheidekammer (8, 8') zu verbinden.

6. Zentrifugalabscheider nach Anspruch 5, wobei der Kanal (18, 18') zusammen mit der Kanalverbindung (19, 19') und dem Fluiddurchgang (20) zu der Abscheidekammer (8, 8') für das Fluid einen Weiterleitungsweg bilden, der so konfiguriert ist, dass das beförderte Fluid die Richtung nicht um mehr als 100°, vorzugsweise um nicht mehr als 90°, im Verhältnis zu der Drehachse (R) ändert.

7. Zentrifugalabscheider nach einem der vorhergehenden Ansprüche, wobei die Nabe (12, 12') einen axialen Anschlag (27, 27') für die Rotorwelle umfasst, in der Form einer Widerlagerfläche mit einer radialen Ausdehnung, die dafür angeordnet ist, an das freie Ende der Rotorwelle (3, 3') innerhalb der Nabe (12, 12') anzustoßen.

8. Zentrifugalabscheider nach einem der vorhergehenden Ansprüche, wobei die Klemmvorrichtung (13) eine äußere Hülse (14), die in Radialrichtung nach außen ausdehnbar und für einen reibschlüssigen Eingriff mit der Nabe (12, 12') konfiguriert ist, eine innere Hülse (15), die in Radialrichtung nach innen ausdehnbar und für einen reibschlüssigen Eingriff mit der Rotorwelle (3, 3') konfiguriert ist, einen ringförmigen Spalt (16), der sich in Axialrichtung zwischen der äußeren Hülse (14) und der inneren Hülse (15) erstreckt, und Mittel (17) zum Unterdrucksetzen eines Druckmediums in dem Spalt, um die äußere Hülse (14) und die innere Hülse (15) zu einem Zustand auszudehnen, in dem sie die Nabe (12, 12') und die Rotorwelle (3, 3') arretieren, umfasst.

9. Zentrifugalabscheider nach einem der vorhergehenden Ansprüche, wobei die Abscheidekammer (8, 8') einen Stapel von abgestumpften kegelförmigen Trennscheiben (11) enthält, die Nabe (12, 12') auf einer Unterseite (7a, 7a') des Rotors (2, 2') angeordnet ist und die Rotorwelle (3, 3') in Vertikalrichtung ausgerichtet ist, und zuoberst den Rotor (2, 2') trägt.

10. Zentrifugalabscheider nach einem der vorhergehenden Ansprüche, wobei der Rotor Auslassöffnungen (22) peripher in der Rotorwand (7a) zum Abführen eines abgeschiedenen Bestandteils in der Form von Schlamm aus der Abscheidekammer (8) umfasst und ein elastisches Gleitelement (21) innerhalb des Rotors bereitgestellt wird, um die Auslassöffnungen (22) zu öffnen und zu schließen, wobei das Gleitelement (21) eine in Radialrichtung innere Kante (23), die mit dem Rotor (2) verbunden und in Axialrichtung im Verhältnis zu demselben fixiert ist, und einen in Radialrichtung äußeren Kantenabschnitt (24), der durch elastische Verformung des Gleitelements (21) in Axialrichtung im Verhältnis zu dem Rotor zwischen einem offenen und einem geschlossenen Zustand der Auslassöffnung (22) beweglich ist, aufweist.

11. Zentrifugalabscheider nach Anspruch 1, wobei die Nabe die Form eines Wellenzapfens annimmt, der sich von der Rotorwand (7a, 7b) aus in Axialrichtung nach außen erstreckt, und die Befestigung die Form einer lösbaren Wellenkupplung annimmt, die den Wellenzapfen und die Rotorwelle miteinander verbindet.

## Revendications

1. Séparateur centrifuge (1, 1') permettant de séparer au moins deux composants d'un mélange fluide qui ont des densités différentes, lequel séparateur centrifuge comprend
un rotor (2, 2') pouvant tourner autour d'un axe de rotation (R) et comprenant une paroi de rotor (7a, 7b, 7a', 7b') qui entoure un espace intérieur comprenant une chambre de séparation (8, 8') à l'intérieur du rotor (2, 2'),
une entrée (18, 18', 19, 19', 20) pour introduire le mélange fluide dans la chambre de séparation (8, 8') du rotor,
au moins une sortie (22, 22', 29) pour décharger un composant séparé du mélange fluide hors du rotor (2, 2'), et
un arbre de rotor (3, 3') agencé pour être connecté à un moyeu (12, 12') sur la paroi de rotor, le rotor (2, 2') étant supporté via l'arbre de rotor qui est connecté à entraînement à un moteur (M) pour faire tourner le rotor autour de l'axe de rotation (R),
dans lequel le moyeu (12, 12') est situé à l'extérieur de l'espace intérieur du rotor et comporte pour l'arbre de rotor un raccord orienté axialement vers l'extérieur du rotor, comportant une fixation (13) agencée sur le côté de la paroi de rotor opposé à l'espace intérieur de manière à pouvoir être actionnée de l'extérieur du rotor afin de connecter de façon libérable le moyeu (12, 12') à l'arbre de rotor (3, 3'),
**caractérisé en ce que** ladite fixation est un dispositif de serrage (13) agencé pour connecter le moyeu (12, 12') à l'arbre de rotor (3, 3') dans une fixation à friction libérable et dans lequel le moyeu (12, 12') est configuré pour entourer radialement une partie de l'arbre de rotor (3, 3') et **en ce qu'**un espace annulaire est agencé radialement entre le moyeu (12, 12') et l'arbre de rotor (3, 3'), dans lequel espace ledit dispositif de serrage (13) est adapté pour une mise en prise à friction du moyeu (12, 12') et de l'arbre de rotor (3, 3') dans la fixation à friction libérable et dans lequel le moyeu comprend une butée axiale (28, 28') pour le dispositif de serrage, sous la forme d'une surface d'appui ayant une étendue radiale, agencée pour s'appuyer contre une extrémité du dispositif de serrage (13), laquelle extrémité est à l'intérieur du moyeu (12, 12').

2. Séparateur centrifuge selon la revendication 1, dans lequel ledit moyeu (12) est tubulaire, s'étend axialement à l'extérieur de la paroi de rotor (7a) et est configuré pour entourer radialement une partie de l'arbre de rotor (3), et la fixation (13) est agencée pour connecter le moyeu (12) à ladite partie de l'arbre de rotor (3).

3. Séparateur centrifuge selon la revendication 1, dans lequel le moyeu (12') prend la forme d'une gorge dans la paroi de rotor (7a') et est configuré pour entourer radialement une partie de l'arbre de rotor (3'), et la fixation (13) est agencée pour connecter le moyeu (12') à ladite partie de l'arbre de rotor (3').

4. Séparateur centrifuge selon l'une quelconque des revendications précédentes, dans lequel l'arbre de rotor (3, 3') et le moyeu (12, 12') sont cylindriques.

5. Séparateur centrifuge selon l'une quelconque des revendications précédentes, dans lequel l'arbre de rotor (3, 3') comporte, passant à travers celui-ci, au moins un conduit axial (18, 18') adapté pour supporter un écoulement de fluide à travers celui-ci pendant le fonctionnement du séparateur centrifuge, et le moyeu (12, 12') comprend un raccord de conduit (19, 19') pour ledit conduit (18, 18') qui est agencé pour communiquer avec la chambre de séparation (8, 8') via au moins un passage de fluide (20) disposé dans le rotor.

6. Séparateur centrifuge selon la revendication 5, dans lequel ledit conduit (18, 18') forme, avec ledit raccord de conduit (19, 19') et ledit passage de fluide (20) vers la chambre de séparation (8, 8'), une voie de transfert pour ledit fluide configurée de telle manière que le fluide transporté ne change pas de direction de plus de 100 °, de préférence de 90 ° par rapport à l'axe de rotation (R).

7. Séparateur centrifuge selon l'une quelconque des revendications précédentes, dans lequel le moyeu (12, 12') comprend une butée axiale (27, 27') pour l'arbre de rotor, sous la forme d'une surface d'appui ayant une étendue radiale, agencée pour s'appuyer contre l'extrémité libre de l'arbre de rotor (3, 3') à l'intérieur du moyeu (12, 12').

8. Séparateur centrifuge selon l'une des revendications précédentes, dans lequel le dispositif de serrage (13) comprend un manchon extérieur (14) qui est extensible radialement vers l'extérieur et configuré pour mettre en prise par friction le moyeu (12, 12'), un manchon intérieur (15) qui est extensible radialement vers l'intérieur et configuré pour mettre en prise par friction l'arbre de rotor (3, 3'), un espace annulaire (16) s'étendant axialement entre le manchon extérieur (14) et le manchon intérieur (15) et des moyens (17) pour pressuriser un fluide à pression dans l'espace afin d'élargir le manchon extérieur (14) et le manchon intérieur (15) jusqu'à un état dans lequel ils verrouillent le moyeu (12, 12') et l'arbre de rotor (3, 3').

9. Séparateur centrifuge selon l'une quelconque des revendications précédentes, dans lequel la chambre de séparation (8, 8') contient un empilement de disques de séparation tronconiques (11), le moyeu (12, 12') est situé sur un dessous (7a, 7a') du rotor (2, 2'), et l'arbre de rotor (3, 3') est orienté verticalement et supporte au plus haut le rotor (2, 2').

10. Séparateur centrifuge selon l'une quelconque des revendications précédentes, dans lequel le rotor comprend des ouvertures de sortie (22) situées périphériquement dans la paroi du rotor (7a) permettant l'évacuation d'un composant séparé sous forme de boue depuis la chambre de séparation (8), et un élément coulissant élastique (21) est agencé à l'intérieur du rotor pour ouvrir et fermer lesdites ouvertures de sortie (22), lequel élément coulissant (21) comporte un rebord radialement intérieur (23) connecté à, et fixe axialement par rapport au rotor (2) et une partie de rebord radialement extérieure (24) qui est mobile axialement par rapport au rotor entre des états ouvert et fermé de l'ouverture de sortie (22) par une déformation élastique de l'élément coulissant (21).

11. Séparateur centrifuge selon la revendication 1, dans lequel le moyeu prend la forme d'un tourillon d'arbre s'étendant axialement à l'extérieur depuis la paroi de rotor (7a, 7b) et la fixation prend la forme d'un raccord d'arbre libérable qui raccorde ensemble le tourillon d'arbre et l'arbre de rotor.
